## Europäisches Patentamt

## European Patent Office

## Office européen des brevets

(19)

(11) Veröffentlichungsnummer: **0 004 083**
**B1**

(12) **EUROPÄISCHE PATENTSCHRIFT**

(45) Veröffentlichungstag der Patentschrift:
24.03.82

(21) Anmeldenummer: 79100710.7

(22) Anmeldetag: 09.03.79

(51) Int. Cl.³: **H 04 N 7/04** // H04N5/18,
H04N5/21

(54) Schaltungsanordnung zur Wiedergewinnung der mittleren Bildhelligkeit eines Videosignals.

(30) Priorität: 15.03.78 DE 2811221

(43) Veröffentlichungstag der Anmeldung:
19.09.79 Patentblatt 79/19

(45) Bekanntmachung des Hinweises auf die Patenterteilung:
24.03.82 Patentblatt 82/12

(84) Benannte Vertragsstaaten:
BE CH DE FR GB IT NL

(56) Entgegenhaltungen:
US-A-2 863 943

(73) Patentinhaber: TE KA DE Felten & Guilleaume
Fernmeldeanlagen GmbH,
Thurn-und-Taxis-Strasse 10 Postfach 4943,
D-8500 Nürnberg 1 (DE)

(72) Erfinder: Heinlein, Werner, Dipl.-Ing., Rosenstrasse 13,
D-8501 Großhabersdorf (DE)

# Schaltungsanordnung zur Wiedergewinnung der mittleren Bildhelligkeit eines Videosignals

Die Erfindung betrifft eine Schaltungsanordnung zur Wiedergewinnung der mittleren Bildhelligkeit eines Videosignals und zur Beseitigung niederfrequenter Störspannungen, wobei auf das Niveau der jeweiligen Synchronimpulsböden geklemmt wird, enthaltend eine Schaltstufe, in der eine Gleichspannungsquelle über die Kollektor-Emitter-Strecke eines Schalttransistors an einem im Eingangskreis des Videosignals angeordneten Kondensator liegt, wobei eine Pulsformerstufe den Schalttransistor steuert.

Bei Übertragunsstrecken, die das Videosignal amplitudenmoduliert übertragen, ist es üblich, vor dem Modulator die mittlere Bildhelligkeit wiederzugewinnen, um die Aussteuerung der Leitungsverstärker möglichst klein zu halten und um niederfrequente Störspannungen des angelieferten Videosignals zu beseitigen.

Bei solchen Klemmschaltungen gelangt das Videosignal über einen Vorverstärker an einen Klemmkondensator. Dieser wird während der Dauer der Synchronimpulse jeweils mittels eines Schalters (z.B. Schalttransistor) auf eine den Arbeitspunkt des nachfolgenden Verstärkers festlegende Spannung umgeladen (Klemmprinzip).

Bisher bekannte Klemmschaltungen, wie sie z.B. in der DE-A-1 809 362 angeführt werden, verursachen nur dann keinerlei in einem Fernsehbild sichtbare Störungen, wenn die Impulsböden, auf welche geklemmt wird, einen hochfrequenzmässig möglichst glatten Verlauf haben. Werden in die Synchronimpulse hochfrequente Impulsfolgen, beispielsweise nach dem PCM-Verfahren zur gleichzeitigen Übertragung des Tonsignals mit dem Videosignal (Sound-in-Synch- oder SIS-Verfahren), eingefügt, verursachen diese Klemmschaltungen Bildstörungen. Diese als Zeilenstreifigkeit bezeichneten Bildstörungen ergeben sich dadurch, dass erstens die Impulsböden der PCM-Impulse im ursprünglichen, ungeklemmten Zustand nicht alle auf gleichem Spannungsniveau sind und dass zweitens die Anzahl der in einem Synchronimpuls enthaltenen PCM-Impulse von Synchronimpuls zu Synchronimpuls, abhängig vom Tonsignal, schwankt. Da nach dem Klemmvorgang die PCM-Impulsböden bei den bisher bekannten Klemmschaltungen auf ein gemeinsames, konstantes Spannungsniveau geklemmt werden, und ausserdem die am Klemmkondensator auftretende Ladungsänderung abhängig ist von der Klemmdauer, d.h. bei SIS-Signalen abhängig von der Dauer der PCM-Impulsböden bzw. von der Anzahl der Impulsböden ist, ergibt sich bei SIS-Signalen eine Abhängigkeit des mittleren Zeilenniveaus vom PCM-Signalinhalt.

Mit solchen Klemmschaltungen entstehen bei einem Videosignal von 1 $V_{SS}$ (entsprechend etwa 0,7 $V_{SS}$ Bildinhalt) Amplituden der SIS-Zeilenstörungen von ca. 15 mV, was einem Störabstand von etwa 33 dB entspricht. Dem Videosignal darf hierbei eine 50-Hz-Brummspannung von maximal

ca. 0,7 $V_{SS}$ überlagert sein, ohne dass ein Aussetzen der Klemmung erfolgt. Die Brummunterdrückung beträgt ca. 26 dB ohne SIS-Impulse in den Synchronimpulsen, mit SIS-Impulsen ca. 20 dB.

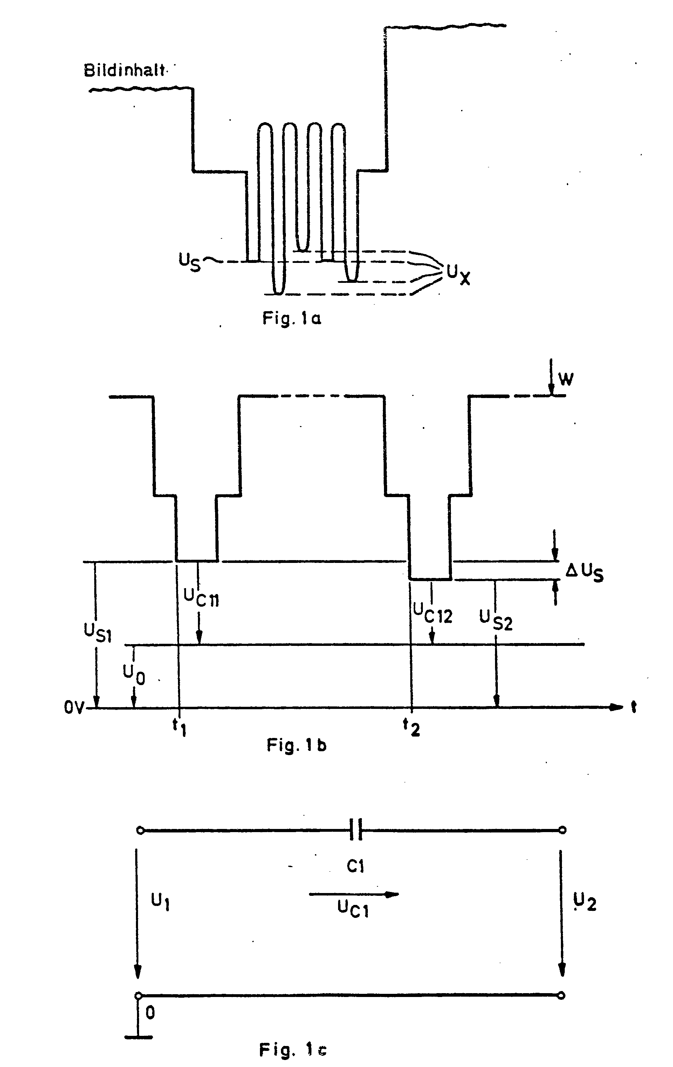

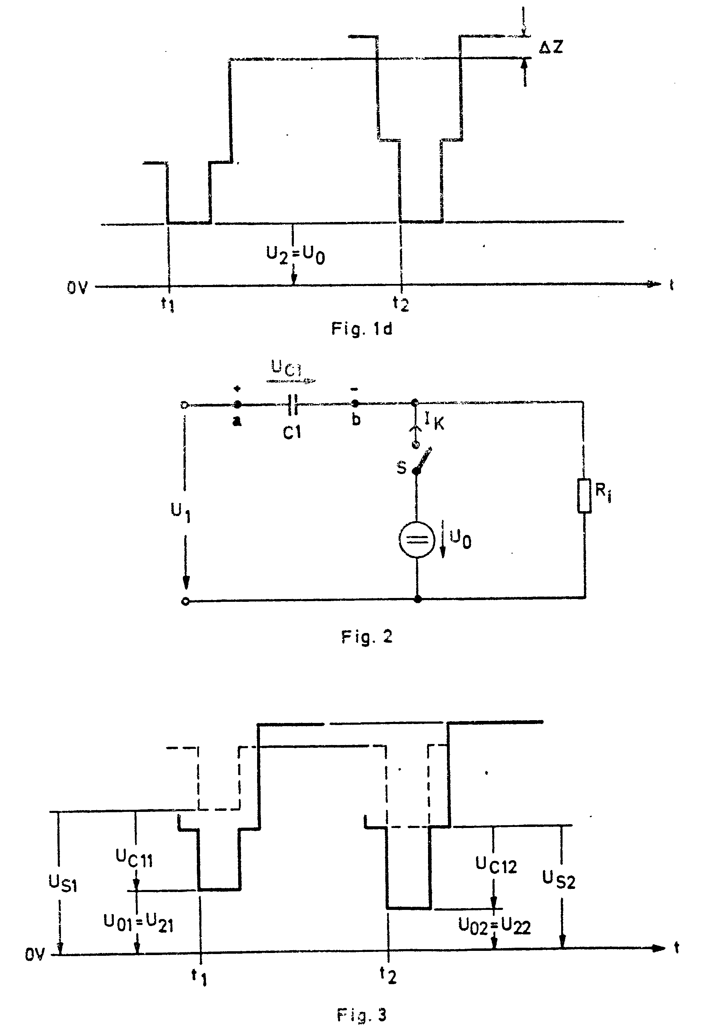

Die Entstehung von Zeilenstörungen wird anhand der Fig. 1a, 1b, 1c und 1d veranschaulicht. Fig. 1a zeigt einen Synchronimpuls eines Videosignals mit vereinfacht dargestellten, in den Synchronimpuls eingefügten SIS-Impulsen. Das Spannungsniveau des Synchronimpulsbodens ist mit $U_S$ bezeichnet. Die infolge der unterschiedlichen Spannungsniveaus $U_x$ der SIS-Impulse entstehende Zeilenstreifigkeit kann z.B. durch zwei aufeinanderfolgende Synchronimpulse zur Zeit $t_1$ und $t_2$ dargestellt werden, wobei die Impulsböden glatt sind, jedoch auf unterschiedlichem Spannungsniveau $U_{S1}$ bzw. $U_{S2}$ liegen, wie dies der in Fig. 1b dargestellte Spannungsverlauf vor dem Klemmkondensator C1, entsprechend $U_1$ in Fig. 1c, zeigt. Der Unterschied zwischen den Spannungsniveaus $U_{S1}$ und $U_{S2}$ ist $\Delta U_S$. Mit der in Fig. 1b eingezeichneten Klemmspannung $U_0$ ergeben sich dann die Spannungen $U_{C11}$ bzw. $U_{C12}$ am Klemmkondensator C1. Ausserdem ist in Fig. 1b zur weiteren Verdeutlichung der entstehenden SIS-Zeilenstörung ein Videosignal angenommen, dessen Bildinhalt für die zwei dargestellten Zeilen dem Weisswert W entspricht, so dass das den Bildinhalt darstellende Signal vor und hinter den Synchronimpulsen auf gleichem Spannungsniveau liegt.

Das Spannungsniveau $U_2$ für die Impulsböden nach dem Klemmkondensator C1 ergibt sich nach erfolgtem Klemmvorgang gemäss Fig. 1c allgemein zu:

$$U_2 = U_1 - U_{C1}.$$

Für Fig. 1b erhält man:

$$U_2 = U_{S1} - U_{C11} = U_{S2} - U_{C12} = U_0.$$

Die Synchronimpulsböden liegen also nach erfolgtem Klemmvorgang entsprechend Fig. 1d beide auf dem Spannungsniveau $U_2 = U_0$, so dass sich die eingezeichnete Zeilenstörung $\Delta Z$ ergibt.

Aufgabe der Erfindung ist es, eine Schaltungsanordnung der eingangs genannten Art anzugeben, die auch beim Einfügen hochfrequenter Impulsfolgen in die Synchronimpulse die Entstehung von Zeilenstörungen weitestgehend verhindert und die trotzdem bei allen Fernsehnormen universell anwendbar ist.

Die Aufgabe wird erfindungsgemäss dadurch gelöst, dass zur Beibehaltung der Potentialschwankungen in den Impulsböden von in die Synchronimpulse eingefügten, hochfrequenten Impulsfolgen bei der Klemmung in der Schaltstufe zwischen Kollektor-Emitter-Strecke des Schalttransistors und der Gleichspannungsquelle ein erster Widerstand und in der Pulsformerstufe ein zweiter Widerstand angeordnet ist, mittels dessen die Höhe der von der Pulsformerstufe erzeugten und an den Schalttransistor der Schaltstufe geführten Klemmimpulse so einstellbar ist, dass infolge des am ersten Widerstand auftretenden, vom Synchronimpulsinhalt abhängigen Spannungsabfall die Spannung am Kondensator im Eingangskreis des Videosignals während der Dauer eines Synchronimpulses, unabhängig vom Synchronimpulsinhalt, konstant bleibt, so dass die unterschiedlichen Potentialwerte der Synchronimpulsböden nicht in Amplitudenschwankungen des mittleren Zeilenniveaus des Videosignals umgesetzt werden.

Bei Anwendung der Erfindung wird der SIS-Störabstand, bei gleicher Brummverträglichkeit wie bei herkömmlichen Schaltungen ($0{,}7$ $V_{SS}/50$ Hz), so weit erhöht, dass eine Zeilenstreifigkeit in einem normal eingestellten Fernsehbild nicht mehr zu erkennen ist, was erfahrungsgemäss bei Störabständen grösser 50 dB der Fall ist.

Vorteilhafte Ausgestaltungen sind den Unteransprüchen entnehmbar.

Anhand der Fig. 2 bis 7 wird im folgenden die Erfindung und ein Ausführungsbeispiel näher erläutert.

Zum besseren Verständnis werden zunächst anhand des in Fig. 2 gezeigten Prinzipschaltbildes die Vorgänge bei bekannten Klemmschaltungen dargestellt. Der Schalter S kann beispielsweise durch einen Transistor verwirklicht sein. Der Widerstand $R_i$ ist der Innenwiderstand des nachfolgenden Verstärkers. Während der Synchronimpulse ist der Schalter S geschlossen und die Spannung $U_1$ wird durch das Synchronimpulsniveau $U_S$ verkörpert. Das Impulsbodenniveau $U_2$ für das geklemmte Signal ergibt sich dann zu $U_2 = U_0$. Wenn die Spannung $U_1$ den Bildinhalt verkörpert, ist der Schalter S offen. Wegen des Innenwiderstandes $R_i$ des Verstärkers wird dann der Punkt b negativer als der Punkt a. Die Gleichspannung am Punkt a bleibt konstant. Dies bedeutet, dass die Gleichspannung $U_{C1}$ am Kondensator C1 grösser und damit die den Arbeitspunkt bestimmende mittleren Gleichspannung $U_2$ kleiner wird (vgl. Fig. 1c). Der Klemmvorgang bewirkt nun, dass C1 mittels der Spannungsquelle $U_0$ wieder auf den ursprünglichen, dem Synchronimpulsniveau zugeordneten Spannungswert entladen wird, wobei dann ein Strom $I_K$ mit der in Fig. 2 eingezeichneten Richtung fliesst, wodurch von Zeile zu Zeile der Arbeitspunkt des nachfolgenden Verstärkers wiederhergestellt wird. Durch diese Wiederherstellung des Arbeitspunktes werden auch der Signalspannung $U_1$ überlagerte niederfrequente Störspannungen, deren Frequenz klein ist gegenüber der Wiederholfrequenz der Synchronimpulse, beseitigt.

Wird nun, wie beispielsweise in der DE-PS 1 809 362, eine Spannungsquelle $U_0$ mit dem Innenwiderstand $0\Omega$ benutzt, so wird der Punkt b des Kondensators C1 (Fig. 2) stets auf konstantem Potential zu Zeiten des Klemmvorgangs gehalten, während am Punkt a das SIS-Signal anliegt, wodurch die Ladung von C1 vom SIS-Inhalt der in den Synchronimpuls eingefügten SIS-Impulse abhängig ist.

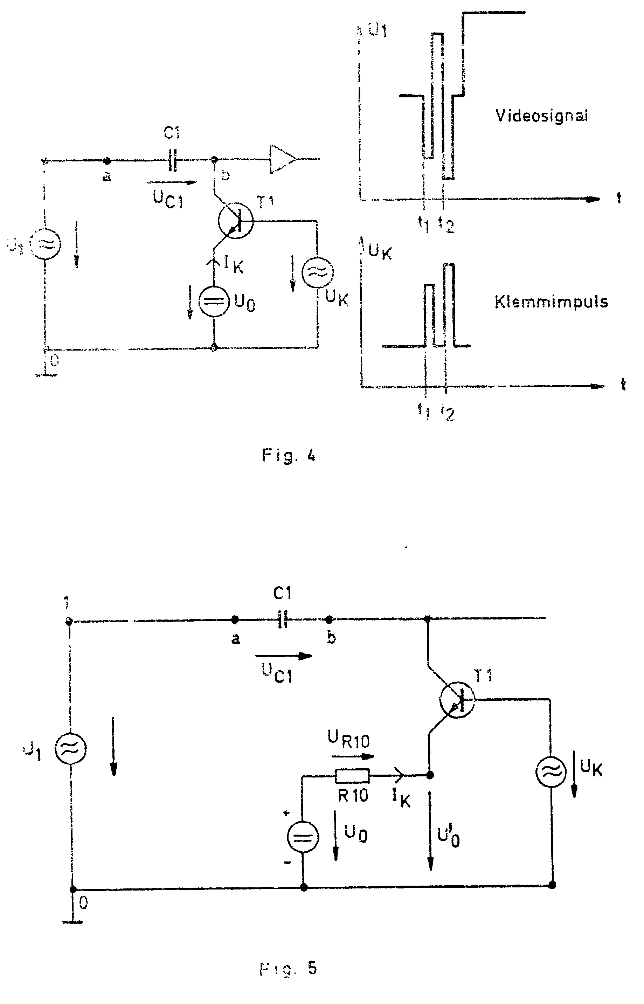

Der Erfindung liegt nun der Gedanke zugrunde, die Umladung des Kondensators C1 derart zu gestalten, dass die Spannung $U_{C1}$ unabhängig vom SIS-Inhalt nach jedem Klemmvorgang konstant ist. Von Fig. 1b ausgehend erhält man dann für das geklemmte Signal unter der Voraussetzung $U_{C11} = U_{C12} = U_{C1}$ den in Fig. 3 dargestellten Verlauf. Die Impulsniveaus $U_{S1}$ und $U_{S2}$ vor der Klemmung sind gestrichelt eingezeichnet. Für die Impulsniveaus nach der Klemmung der beiden dargestellten Impulse erhält man dann:

$$U_{21} = U_{S1} - U_{C1} \text{ und } U_{22} = U_{S2} - U_{C1}.$$

Hierbei ist $U_{21} = U_{01} > U_{22} = U_{02}$.

Für die Einhaltung der Bedingung $U_{C1} = \text{const}$ muss also die Spannung $U_0$ in Abhängigkeit von den Spannungsniveaus der SIS-Impulsböden variiert werden, so dass bei Impulsspitzen grösserer Amplitude $U_0$ kleiner wird als bei Impulsspitzen kleinerer Amplitude. Die Potentialschwankungen in den Impulsböden bleiben somit bei der Klemmung erhalten, so dass diese unterschiedlichen Potentialwerte nicht in Amplitudenschwankungen des mittleren Zeilenniveaus des Videosignals umgesetzt werden.

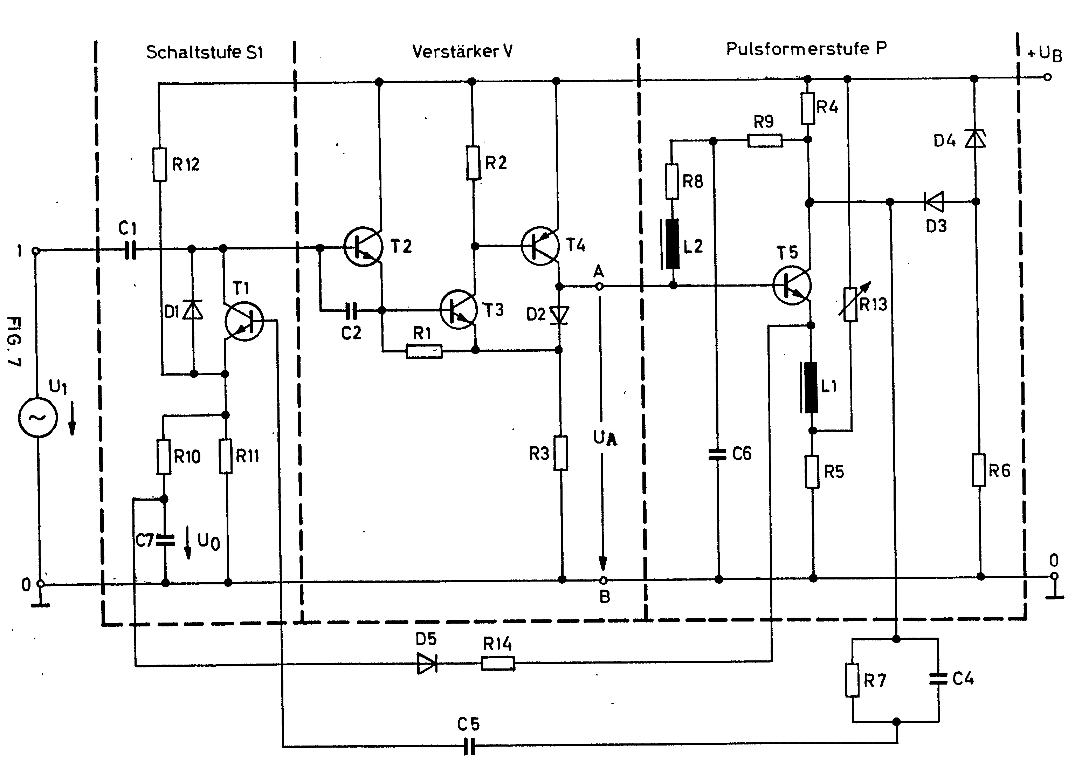

Die praktische Realisierung dieser Abhängigkeit der Spannung $U_0$ erfolgt durch die Einfügung des Widerstandes R10 in Serie zur Spannungsquelle $U_0$ mit dem Innenwiderstand $0\Omega$ (vgl. Fig. 5).

Das Prinzipschaltbild der ursprünglichen Klemmschaltung entsprechend Fig. 2 ist in Fig. 4 dargestellt. Ausserdem ist dort der Signalverlauf $U_1$ am Eingang und der entsprechende Klemmimpulsverlauf $U_K$ an der Basis des Transistors T1 dargestellt. Auf die Erzeugung der Klemmimpulse wird später eingegangen. Der Klemmtransistor T1 in Fig. 4 arbeitet ohne Emittergegenkopplung. Bei dem zur Zeit $t_2$ auftretenden «längeren» Impuls, d.h. mit niedrigerem Potential des Impulsbodens, wird der Transistor T1 besser durchgeschaltet als bei dem zur Zeit $t_1$ auftretenden «kürzeren» Impuls, da das Emitterpotential von T1 gleich der Spannung $U_0 = \text{const}$ ist. Dies begünstigt noch zusätzlich die Entstehung von SIS-Störungen, da zur Zeit $t_2$ die Seite b des Kondensators C1 besser auf das Potential $U_0$ gebracht wird als zur Zeit $t_1$. Das bedeutet, dass $U_{C1}$ zur Zeit $t_2$ (vgl. $U_{C12}$ in Fig. 1b) infolge der besseren Durchschaltung noch stärker kleiner wird als zur Zeit $t_1$.

In Fig. 5 ist die Prinzipschaltung mit eingefügtem Widerstand R10 dargestellt. An diesem Widerstand fällt die Spannung

$$U_{R10} = R10 \cdot I_K \text{ ab.}$$

Für die eingezeichnete Spannung $U_0$ gilt dann:

$$U_0 = O_0 - U_{R10}.$$

Bei grösserem $U_K$, d.h. bei positiverem Klemmimpuls zur Zeit $t_2$ an der Basis von T1 wird zunächst der Transistor T1 ebenfalls besser durchgesteuert, wodurch gegenüber dem Zeitpunkt $t_1$ jetzt ein grösserer Strom $I_K$ fliesst ($I_{K2} > I_{K1}$). Hierdurch entsteht an R10 zur Zeit $t_2$ ein grösserer Spannungsabfall, so dass $U_o$ zur Zeit $t_2$ kleiner ist als zur Zeit $t_1$ ($U_{o2} < U_{o1}$).

Dies bewirkt ein zusätzlich besseres Durchschalten von T1 zur Zeit $t_2$, da das $U_o$ entsprechende Emitterpotential von T1 sinkt bzw. die für die Durchsteuerung von T1 massgebende Basis-Emitter-Spannung $U_{BE}$ um den Wert $U_{R10} = R10 \cdot I_K$ steigt.

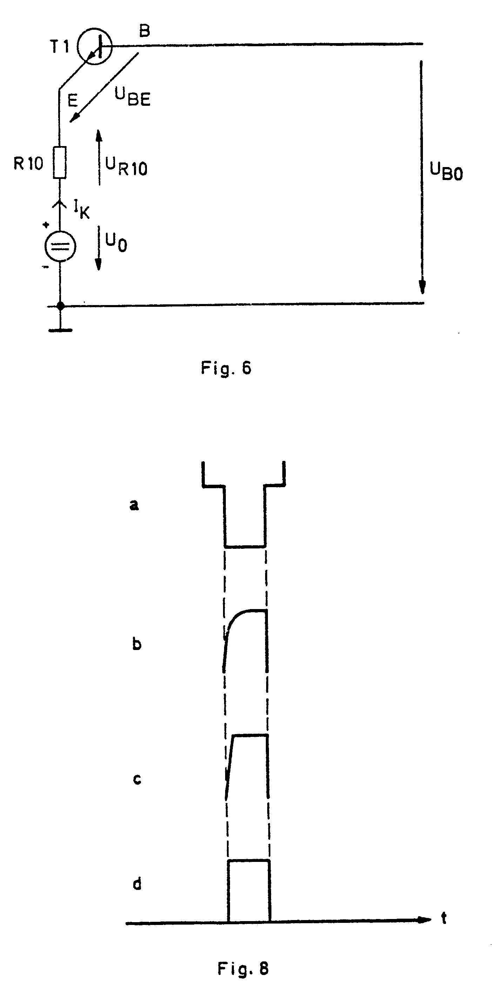

Diese Verhältnisse sind in Fig. 6 dargestellt. Für die Durchschaltespannung $U_{BE}$ des Transistors T1 gilt:

$$U_{BE} = U_{B0} - U_0 + U_{R10} = U_{B0} - U_o.$$

Bei den sich einstellenden Gleichgewichtszuständen ergibt sich bei entsprechender Dimensionierung von R10 der in Fig. 3 dargestellte und angestrebte Zustand $U_{01} > U_{02}$.

Fig. 7 zeigt im Detail ein Ausführungsbeispiel der erfindungsgemässen Schaltungsanordnung. Diese Schaltungsanordnung besteht aus der Schaltstufe S1, dem Verstärker V und der Pulsformerstufe P. Der Verstärker V ist hier beispielsweise als mehrstufiger Transistorverstärker mit hochohmigem Eingang ausgelegt, wie in Fig. 3 der DE-PS 809 362 gezeigt.

Die Schaltstufe S1, an deren Eingang das Videosignal $U_1$ anliegt, besteht aus dem Klemmtransistor T1, dem Klemmkondensator C1, dem Spannungsteiler R11/R12, dem Kondensator C7, dem Widerstand R10 und der Diode D1. Die in Fig. 5 dargestellte Spannungsquelle $U_0$ mit dem Innenwiderstand $0\Omega$ wird hier mittels des Spannungsteilers R11/R12 und des Kondensators C7 realisiert. C7 wird während einer Zeile, d.h. in der Zeit zwischen zwei Horizontal-Synchronimpulsen (H-Impulsen) bei gesperrtem Transistor T1, über R10 auf die durch R11/R12 bestimmte Spannung aufgeladen. Da R12 hochohmig gegenüber R10 ist und C7 kapazitätsmässig sehr viel grösser als C1 ist (z.B. C7 = 220 $\mu F$ und C1 = 0,047 $\mu F$), wirkt C7 bei durchgeschaltetem Transistor T1 als Spannungsquelle mit dem Innenwiderstand $0\Omega$. Die Funktion des der Spannungsquelle in Serie geschalteten Widerstandes R10 wurde bereits anhand der Fig. 5 erläutert. In einer ausgeführten Schaltung ist beispielsweise R10 = 200 $\Omega$, R12 = 3,3 k$\Omega$ und R11 = 400 $\Omega$. Um temperaturbedingte Schwankungen der SIS-Zeilenstörungen zu kompensieren, kann R10 als 200-$\Omega$-Heissleiter ausgebildet sein.

Die Pulsformerstufe P mit dem Transistor T5 dient zur Erzeugung der Klemmimpulse für die Schaltstufe S1 und ist galvanisch an den Ausgang des Verstärkers V angekoppelt. Am Kollektor des Transistors T5 werden die umgepolten Klemmimpulse abgegriffen und über das RC-Glied C4/R7 und den Koppelkondensator C5 an die Basis des Schalttransistors T1 geführt. Der Kollektorwiderstand R4 ist hier nicht wie in Fig. 3 der DE-PS 1 809 362 mit einem Kondensator C3 überbrückt, um eine Verzögerung der Anstiegszeit der Klemmimpulse zu verhindern und somit eine zu den SIS-Impulsen zeitsynchrone Klemmung zu ermöglichen. Die sich ergebenden Verhältnisse sind in Fig. 8 anhand eines nicht mit SIS-Impulsen behafteten Synchronimpulses dargestellt. Fig. 8a zeigt einen Synchronimpuls des Videosignals und Fig. 8b den am Kollektor von T5 auftretenden Klemmimpuls bei vorhandenem Kondensator C3. In Fig. 8c ist dann der an der Basis von T1 auftretende Klemmimpuls dargestellt, wobei die impulsversteilernde Wirkung des RC-Gliedes C4/R7 sichtbar ist. Fig. 8d zeigt schliesslich den Klemmimpuls an der Basis von C1 ohne den Kondensator C3. Infolge des fehlenden Kondensators C3 tritt eine Impulsformung nun nicht mehr ein, was im Hinblick auf eine möglichst zeitsynchrone Klemmung auf die eine relativ hohe Wiederholfrequenz aufweisenden SIS-Impulse erwünscht ist.

Um aber zu vermeiden, dass durch den zeitsynchron zu dem Synchronimpuls des Signals erscheinenden Klemmimpuls (Fig. 8d) Signalverfälschungen in den Synchronimpulsflanken der mit T5 gebildeten Pulsformerstufe mittels des veränderbaren Widerstandes R13 so eingestellt, dass die Klemmimpulse die Amplitude erhalten, mit der einerseits die Möglichkeit der Überlagerung von 0,7-$V_{SS}$-/50-Hz-Brumm noch gegeben ist und anderseits die Umladung von C1 durch das hierdurch festgelegte, weichere Durchschalten von T1 so vor sich geht, dass gerade keine Schlieren bzw. Klemmpiepse in den Synchronimpulsflanken sichtbar werden.

Die in der Schaltstufe S1 zwischen Emitter und Kollektor des Transistors T1 angeordnete Diode D1 dient zur Einleitung des Klemmvorgangs, da dieser bei kleinen Spannungen des Videosignals sonst nicht in Gang kommen würde. Wegen der fehlenden Ladung auf dem Kondensator C1 wäre der Verstärker gesperrt, so dass auch keine Klemmimpulse entstehen könnten, die diese Ladung auf C1 bringen würden. Arbeitet die eigentliche Klemmschaltung einmal, ist die Diode D1 wirkungslos, da sie dauernd gesperrt ist. Die in die Emitterleitung von T5 in der Pulsformerstufe P eingefügte Drosselspule mit Dämpfungsperle L1 bewirkt einen Verstärkungsverlust der Pulsformerstufe für die hochfrequenten Impulsanteile der SIS-Impulse. Das zwischen dem Bezugspotential O, dem Kollektor und der Basis von T5 eingefügte T-Glied, bestehend aus den Widerständen R8 und R9, der Induktivität L2 und der Querkapazität C6, verursacht durch seine Tiefpasscharakteristik eine Eigengegenkopplung der Pulsformerstufe für niederfrequente Impulsanteile der SIS-Impulse. Mit diesen beiden Massnahmen lässt sich zwar der Absolutwert der SIS-Störungen nicht verringern, jedoch tritt durch die so bewirkte Klemmimpulsformung ein deutlich sichtbarer Beruhigungseffekt der in einem Fernsehbild eventuell noch sichtbaren SIS-Störungen auf, wobei das eigentliche Videosignal keinerlei erkennbare Veränderungen erfährt. Man erhält praktisch zusätzlich einen geglätteten Verlauf der noch mit einem Abstand von ca. 50 dB vorhandenen SIS-Störungen, das dann von Bedeutung ist, wenn auf einer Videoübertragungsstrecke mehr als eine Klemmschaltung eingesetzt wird, da das Auge die dann noch vorhandenen Störungen mit geglättetem Verlauf als weniger stark empfindet.

Der Temperaturgang des Transistors T5 wird durch die Diode D2 kompensiert. Um zu verhindern, dass der Transistor T5 während des Bildinhaltes in die Sättigung gesteuert wird und damit das Signal im Hauptweg verzerrt, wird die Kollektorspannung von T5 mit Hilfe der Diode D3, der Z-Diode D4 und des Widerstandes R6 begrenzt.

Bei manchen Testbildern, wie z. B. im Dillberg-Testbild, ist bei bestimmten Farben eine Übermodulation vorhanden, die bis unter das Synchronimpulsbodenniveau reicht. Um zu vermeiden, dass die Klemmschaltung auf diese Spitzen, die ausserhalb der Synchronimpulse auftreten, klemmt und dadurch sehr grosse Bildfehler verursacht, ist zwischen der Verbindung des Kondensators C7 (Spannungsquelle $U_0$) mit dem Widerstand R10 in der Schaltstufe und dem Emitter des Transistors T5 in der Pulsformerstufe die Serienschaltung einer Diode D5 und eines Widerstandes R14 eingefügt. Bei normalen Synchronimpulsen fliesst kein Strom durch die Diode D5, da sich der Potentialunterschied zwischen dem Emitter von T5 und dem Verbindungspunkt zwischen C7 und R 10 so einpendelt, dass die Diode D5 gesperrt ist. Tritt eine Farbübermodulation auf, dessen Spitzen bis unterhalb des Synchronimpulsbodenniveaus reichen, wird die Diode D5 vorübergehend durchlässig, wodurch die Spannung des Kondensators C7 im Rhythmus der Farbschwingung (ca. 2,4 MHz) verändert wird, da ein Kondensator von der Grössenordnung wie C7, der beispielsweise aus einem 220-$\mu$F-Tantal-Elektrolyt-Kondensator besteht, wegen seiner Serieninduktivität für diese Frequenzen auch nicht mehr angenähert einen Kurzschluss darstellt. Der Transistor T1 schaltet also zwar bei den Spitzen der Farbschwingung durch, die Spannung aber, mit welcher diese den Kondensator C1 umlädt, entspricht nicht dem Spannungswert des Synchronimpulsbodenniveaus, sondern ist infolge der Wirkung der durchgeschalteten Diode D5 erniedrigt. Auf diese Weise erfolgt zwar eine Klemmung der negativen Farbschwingungsspitzen, bei entsprechender Dimensionierung des Widerstandes R14 (beispielsweise 250 $\Omega$) aber gerade auf einem solchen Niveau, dass keine Verschiebung des Potentials des Bildinhaltes stattfindet. Das Widerstands-Dioden-Glied D5/R14 unterstützt also in diesem Fall die Wirkung des Widerstandes R10 nach dem Prinzip der mitgeführten Spannungsquelle $U_0$. Die Stufung zwischen Synchronimpulsniveau und Farbschwingungsniveau bleibt erhalten. Allein mit R10 wären Bildfehler infolge solch gravierender Spannungsunterschiede zwischen Synchronimpulsniveau und Farbschwingungsniveau nicht zu vermeiden.

Mit der erfindungsgemässen Schaltungsanordnung ist es also möglich, die Entstehung von SIS-Zeilenstörungen weitestgehend zu verhindern, wobei die unterschiedlichen Amplitudenwerte der PCM-Impulsböden nicht wie bei bisher üblichen Klemmschaltungen in Amplitudenschwankungen des mittleren Zeilenniveaus umgesetzt werden, sondern diese Amplitudenschwankungen in den Synchronimpulsböden erhalten bleiben, wobei dann auf das jeweilige Synchronimpulsbodenniveau geklemmt wird. Diese Tatsache kommt deshalb einer Verminderung der von Klemmschaltungen verursachten Signalverfälschungen gleich. Ausserdem sind die Signalverfälschungen für die Vertikal- und Horizontal-Synchronimpulse absolut gesehen geringer als bei den bisherigen Schaltungen. Auch das Zeilenrauschen ist geringer, weil den Synchronimpulsböden überlagerte Rauschspitzen analog wie SIS-Impulsspitzen behandelt werden. Die eingangs aufgeführten Werte für die Brummunterdrückung (ca. 26 dB ohne SIS-Impulse und ca. 20 dB mit SIS-Impulsen) werden ebenfalls erreicht. Durch Klemmung auf die Synchronimpulsböden ist die Erfindung für alle Fernsehnormen geeignet.

## Patentansprüche

1. Schaltungsanordnung zur Wiedergewinnung der mittleren Bildhelligkeit eines Videosignales und zur Beseitigung niederfrequenter Störspannungen, wobei auf das Niveau der jeweiligen Synchronimpulsböden geklemmt wird, enthaltend eine Schaltstufe (S1), in der eine Gleichspannungsquelle ($U_0$) über die Kollektor-Emitter-Strecke eines Schalttransistors (T1) an einem im Eingangskreis des Videosignals angeordneten Kondensator (C1) liegt, wobei eine Pulsformerstufe (P) den Schalttransistor der Schaltstufe steuert, dadurch gekennzeichnet, dass zur Beibehaltung der Potentialschwankungen in den Impulsböden von in die Synchronimpulse eingefügten, hochfrequenten Impulsfolgen bei der Klemmung in der Schaltstufe (S1) zwischen Kollektor-Emitter-Strecke des Schalttransistors (T1) und der Gleichspannungsquelle ($U_0$) ein erster Widerstand (R10) und in der Pulsformerstufe (P) ein zweiter Widerstand (R13) angeordnet ist, mittels dessen die Höhe der von der Pulsformerstufe (P) erzeugten und an den Schalttransistor (T1) der Schaltstufe (S1) geführten Klemmimpulse so einstellbar ist, dass infolge des am ersten Widerstand (R10) auftretenden, vom Synchronimpulsinhalt abhängigen Spannungsabfalls die Spannung ($U_{C1}$) am Kondensator (C1) im Eingangskreis des Videosignals während der Dauer eines Synchronimpulses, unabhängig vom Synchronimpulsinhalt, konstant bleibt, so dass die unterschiedlichen Potentialwerte der Synchronimpulsböden nicht in Amplitudenschwankungen des mittleren Zeilenniveaus des Videosignals umgesetzt werden.

2. Schaltungsanordnung nach Anspruch 1, mit einem breitbandigen Verstärker (V) mit hohem Eingangswiderstand, wobei die Pulsformerstufe (P) über einen Transistor (T5), dessen Kollektor-Emitter-Strecke jeweils über einen Widerstand mit dem Bezugspunkt (O) der Schaltungsanordnung bzw. der Versorgungsspannung ($U_B$) verbunden ist, galvanisch an den Ausgang des Verstärkers angekoppelt ist, dadurch gekennzeichnet, dass der zweite Widerstand (R13) zwischen dem Emitter des Transistors (T5) und der Versorgungsspannung ($U_B$) angeordnet ist und die Klemmimpulse am Kollektor des Transistors (T5) abgegriffen sind.

3. Schaltungsanordnung nach Anspruch 2, dadurch gekennzeichnet, dass in der Pulsformerstufe (P) ein T-Glied angeordnet ist, dessen erster Längszweig, bestehend aus der Serienschaltung einer Induktivität (L2) und eines Widerstandes (R8), mit der Basis des Transistors (T5) verbunden ist, dessen zweiter Längszweig, bestehend aus einem Widerstand (R9), mit dem Kollektor des Transistors (T5) verbunden ist und dessen Querzweig, bestehend aus einem Kondensator (C6), mit dem Bezugspunkt (0) der Schaltungsanordnung verbunden ist.

4. Schaltungsanordnung nach Anspruch 2 oder 3, dadurch gekennzeichnet, dass in der Emitterleitung des Transistors (T5) der Pulsformerstufe (P) eine Drosselspule mit Dämpfungsperle (L1) liegt.

5. Schaltungsanordnung nach Anspruch 2, dadurch gekennzeichnet, dass der erste Widerstand (R10) als Heissleiter ausgebildet ist.

6. Schaltungsanordnung nach einem der Ansprüche 2 bis 5, dadurch gekennzeichnet, dass zwischen der Verbindung der Gleichspannungsquelle ($U_0$) mit dem ersten Widerstand (R10) der Schaltstufe (S1) und dem Emitter des Transistors (T5) der Pulsformerstufe (P) die Serienschaltung einer Diode (D5) und eines Widerstandes (R14) liegt.

## Claims

1. Circuit arrangement for restoring the mean picture brightness of a video signal for eliminating low-frequency interference voltages, whereby clamping is effected to the level of the respective synchronization-pulse bottoms, containing a switching stage (S1) where a d-c voltage source ($U_0$) is applied via the collector-emitter path of a switching transistor (T1) to a capacitor (C1) arranged in the input circuit of the video signal and, whereby a pulse-former stage (P) controls the switching transistor of the switching stage, characterized in that for maintaining the potential variations in the pulse bottoms of high-frequency pulse sequences inserted in the synchronization pulses when clamping, a first resistor (R10) is arranged in the switching stage (S1) between collector-emitter path of switching transistor (T1) and d-c voltage source ($U_0$), and a second resistor (R13) in the pulse-former stage (P), by means of which the height of the clamping pulses generated by pulse-former stage (P) and applied to switching transistor (T1) in switching stage (S1) can be adjusted such that as a result of the voltage drop dependent of the synchronization-pulse content and occuring at the first resistor (R10), the voltage ($U_{01}$) at capacitor (C1) in the input circuit of the video signal remains constant for the duration of a synchronization pulse, and independent of the synchronization-pulse content so that varying potential values of the synchronization-pulse bottoms cannot be converted into amplitude variations of the mean line level of the video signal.

2. Circuit arrangement as per claim 1, with a broadband amplifier (V) having high input resistance, whereby the pulse-former stage (P) is galvanically coupled to the output of the amplifier via a transistor (T5), the collector-emitter path of which is connected via a resistor each to the reference point (0) of the circuit arrangement and to supply voltage ($U_B$), respectively, characterized in that the second resistor (R13) is arranged between emitter of transistor (T5) and supply voltage ($U_B$), and that the clamping pulses are tapped at the collector of transistor (T5).

3. Circuit arrangement as per claim 2, characterized in that a T network is arranged in the pulse-former stage (P), the first longitudinal branch of which, consisting of the series-connection of an inductance (L2) and of a resistor (R8), is connected to the base of transistor (T5), the second longitudinal branch of which, consisting of a resistor (R9), is connected to the collector of transistor (T5), and the transverse branch of which, consisting of capacitor (C6), is connected to the reference point (0) of the circuit arrangement.

4. Circuit arrangement as per claim 2 or 3, characterized in that an inductor with attenuation bead (L1) is situated in the emitter path of transistor (T5) of the pulse-former stage (P).

5. Circuit arrangement as per claim 2, characterized in that the first resistor (R10) is designed as a thermistor.

6. Circuit arrangement as per one of the claims 2 to 5, characterized in that the series-connection of a diode (D5) and of a resistor (R14) is situated between the connection of the d-c voltage source ($U_0$) with first resistor (R10) of switching stage (S1), and the emitter of transistor (T5) of pulse-former stage (P).

## Revendications

1. Circuit de rétablissement de la luminance moyenne d'image d'un signal vidéo et d'élimination de tensions parasites à basse fréquence, dans lequel on verrouille sur le niveau des lignes de base momentanées d'impulsions de synchronisation, comportant un étage de commutation (S1) dans lequel une source de tension continue ($U_0$) est reliée, par l'intermédiaire du parcours collecteur-émetteur d'un transistor de commutation (T1), à un condensateur (C1) disposé dans le circuit d'entrée du signal vidéo, un étage formeur d'impulsion (P) commandant le transistor de commutation de l'étage de commutation, caractérisé en ce que pour conserver les variations de potentiel dans les lignes de base d'impulsions de successions d'impulsions à haute fréquence intercalées dans les impulsions de synchronisation, lors du verrouillage, dans l'étage de commutation (S1) est disposée, entre le parcours collecteur-émetteur du transistor de commutation (T1) et la source de tension continue ($U_0$), une pre- mière résistance (R10) et dans l'étage formeur d'impulsions (P), une deuxième résistance au moyen de laquelle la hauteur des impulsions de verrouillage engendrées par l'étage formeur d'impulsions (P) et conduites au transistor (T1) de l'étage de commutation (S1) peut être réglée de façon telle que par suite de la chute de tension se produisant sur la première résistance (R10) et dépendant du contenu d'impulsions de synchro- nisation, la tension ($U_{C1}$) au condensateur du cir- cuit d'entrée du signal vidéo reste constante pendant la durée d'une impulsion de synchronisation, indépendamment du contenu d'impulsions de synchronisations, de sorte que les différentes valeurs de polarité des lignes de base d'impulsions de synchronisation ne se transforment pas en variations d'amplitude du niveau moyen de ligne du signal vidéo.

2. Circuit selon la revendication 1, comportant un amplificateur à large bande (V) à grande résistance d'entrée, l'étage formeur d'impulsions (P) étant relié au point de référence (0) du circuit ainsi qu'à la tension d'alimentation ($U_B$), chaque fois que par l'intermédiaire d'une résistance et étant couplé galvaniquement à la sortie de l'amplificateur, caractérisé en ce que la deuxième résistance (R13) est disposée entre l'émetteur du transistor (T5) et la tension d'alimentation ($U_B$) et que les impulsions de verrouillage sont prises au collecteur du transistor (T5).

3. Circuit selon la revendication 2, caractérisé en ce que dans l'étage formeur d'impulsions (P) est disposée une cellule en T dont la première branche longitudinale, composée du montage en série d'une inductance (L2) et d'une résistance (R8) est reliée à la base du transistor (T5), dont la deuxième branche longitudinale, composée d'une résistance (R9), est reliée au collecteur du transistor (T5) et dont la branche transversale, composée d'un condensateur (C6) est reliée au point de référence (0) du circuit.

4. Circuit selon l'une des revendications 2 ou 3, caractérisé en ce que dans le conducteur d'émetteur du transistor (T5) de l'étage formeur d'impul- sions (P) est placée et bobine d'arrêt avec perle d'amortissement (L1).

5. Circuit selon la revendication 2, caractérisé en ce que la première résistance (R10) est conçue sous forme de thermistance.

6. Circuit selon les revendications 2 à 5, caractérisé en ce qu'entre la liaison de la source de tension continue ($U_0$) à la première résistance (R10) de l'étage de commutation (S1) et l'émetteur du transistor (T5) de l'étage formeur d'impulsions (P) est placé le montage en série d'une diode (D5) et d'une résistance (R14).

Bildinhalt

$U_S$

$U_X$

Fig. 1a

$W$

$\Delta U_S$

$U_{C11}$

$U_{C12}$  $U_{S2}$

$U_{S1}$

$U_0$

0V

$t_1$

$t_2$

$t$

Fig. 1b

C1

$U_1$  $U_{C1}$  $U_2$

0

Fig. 1c

Fig. 1d

Fig. 2

Fig. 3

Fig. 4

Fig. 5

13

Pulsformerstufe P

Verstärker V

Schaltstufe S1

+U_B

0

R6

C4

D4

D3

R13

R7

R4

R5

L1

R9

T5

C6

R8 L2

A → U_A → B

T4

D2

R3

R2

T3

R1

T2

C2

R14

D5

C5

T1

R11

D1

R10

U_0

R12

C7

C1

U_1

FIG. 7

Fig. 6

Fig. 8